# EUROPÄISCHE PATENTANMELDUNG

(11) **EP 4 810 746 A1**
(43) Veröffentlichungstag der Anmeldung: **23.09.2026**
(21) Anmeldenummer: 25170364.1
(22) Anmeldetag: 14.04.2025
(51) Int. Cl.: E04G 15/06

(54) **SCHALUNGSKÖRPER UND VERFAHREN ZUR ERRICHTUNG VERTIKALER DURCHLÄSSE**

(30) Priorität: 18.03.2025 AT 501752025
(71) Anmelder: Mahjoubian, Payam, 1150 Wien (AT)
(72) Erfinder: Mahjoubian, Payam, 1150 Wien (AT)
(74) Vertreter: KLIMENT & HENHAPEL

(57) **Zusammenfassung**

Schalungskörper zur Errichtung vertikaler Durchlässe in einer Geschossdecke (G) für Rohre oder Leitungen, für den vorgeschlagen wird, dass er aus zumindest einem, eine geschlossene Mantelfläche bildenden metallischen Seitenteil (S1, S2, S3, S4) mit einer Höhe (h), die der Dicke (d) der Geschossdecke (G) entspricht, gebildet wird, wobei in einem unteren Bereich des zumindest einen Seitenteils (S1, S2, S3, S4) eine den vom zumindest einen Seitenteil (S1, S2, S3, S4) umgrenzten Querschnitt abdeckende und in das zumindest eine Seitenteil (S1, S2, S3, S4) einlegbare Grundplatte (1) mit Aussparungen (7) für Rohre oder Leitungen angeordnet ist, und in einem oberen Bereich des zumindest einen Seitenteils (S1, S2, S3, S4) Auflager (AL) für eine Abdeckung (6) vorgesehen sind.

## Beschreibung

Die Erfindung betrifft einen Schalungskörper zur Errichtung vertikaler Durchlässe in einer Geschossdecke für Rohre oder Leitungen gemäß dem Oberbegriff von Anspruch 1, sowie ein Verfahren zur Errichtung vertikaler Durchlässe in einer Geschossdecke für Rohre oder Leitungen mithilfe eines erfindungsgemäßen Schalungskörpers gemäß Anspruch 13.

Bei der Errichtung mehrgeschossiger Bauwerke werden beim Betonieren der Geschossdecken in der Regel bauliche Maßnahmen getroffen, um die spätere vertikale Verlegung von Rohren oder Leitungen für Wasser und Abwasser, zur Belüftung oder Heizung sowie für die elektrische Versorgung zu erleichtern. Diese baulichen Maßnahmen bestehen in der Anfertigung von Durchbrüchen in den Geschossdecken zur Verwirklichung vertikaler Installationsschächte, durch die in einem späteren Arbeitsschritt die Rohre oder Leitungen von einem Geschoss zum nächsten geführt werden können. Dieses Bündel an Rohren oder Leitungen wird auch als Steigstrang oder HKLS-Steigleitung bezeichnet, und der Durchbruch einer Geschossdecke entsprechend als Steigstrang-Öffnung. Die in mehreren Geschoßen übereinander liegenden Steigstrang-Öffnungen bilden in ihrer Gesamtheit den Installationsschacht.

Die Durchbrüche durch eine Geschossdecke werden verwirklicht, indem vor dem Betonieren der Geschossdecke Seitenschalelemente zur Abgrenzung einer Aussparung für den Installationsschacht auf der Deckenschalung der betreffenden Geschossdecke angeordnet werden. Nach dem Betonieren und dem Entfernen der Deckenschalung und der Seitenschalelemente verbleibt somit ein Durchbruch durch die Decke, der die Steigstrang-Öffnung bildet.

Nach dem Verlegen der Rohre oder Leitungen im Installationsschacht muss der verbleibende Freiraum der Durchbrüche in erster Linie aus Gründen des Brandschutzes verfüllt werden. Hierfür gibt es Brandschutznormen für die Verbauung solcher Steigstrang-Öffnungen, die unbedingt erfüllt werden müssen. Eine Möglichkeit besteht darin den Durchbruch mit einer Weichschott-Isolierung auszufüllen und abzudichten, und aus Gründen des Schallschutzes mit Stopfwolle zu versehen.

Diese Vorgangsweise verfügt in der Praxis über mehrere Nachteile. So stellt der Durchbruch vor der Verfüllung mit der Weichschott-Isolierung eine erhebliche Absturzgefahr dar. Es müssen in der Praxis somit Maßnahmen zur Absturzsicherung getroffen werden. Zudem ist das Verfüllen mit der Weichschott-Isolierung aufwändig und verursacht Zeitverzögerungen und Kosten. Des Weiteren muss sie bei Wasserschäden erneuert werden.

Daher wurde im österreichischen Patent AT 522.857 des Anmelders ein Verfahren zur Errichtung vertikaler Installationsschächte für Rohre oder Leitungen in mehrgeschossigen Bauwerken mithilfe eines plattenförmigen Einsatzkörpers vorgeschlagen. Der plattenförmige Einsatzkörper weist im Umfangsbereich der Plattenebene auskragende Verankerungselemente auf und wird auf die Deckenschalung aufgelegt. Die Seitenschalelemente zur Abgrenzung einer Aussparung für den Installationsschacht werden in weiterer Folge auf der Plattenebene des Einsatzkörpers angeordnet. Die Deckenschalung sowie die Seitenschalelemente werden nach dem Betonieren der Geschoßdecke unter Verbleib des Einsatzkörpers entfernt. Aufgrund der Verwendung des plattenförmigen Einsatzkörpers wird der lichte Querschnitt des Durchbruches somit abgedeckt, sodass eine Absturzgefahr vermieden und das Verfüllen der Steigstrang-Öffnung erleichtert wird. Die im Umfangsbereich der Plattenebene auskragenden Verankerungselemente stehen bei horizontaler Gebrauchslage des Einsatzkörpers nach oben und seitlich von der Plattenebene ab. Der Randbereich mit den Verankerungselementen des Einsatzkörpers befindet sich somit außerhalb der von den Seitenschalelementen abgegrenzten Aussparung und befindet sich somit in jenem Bereich, der betoniert wird. Nach dem Betonieren wird der Einsatzkörper mithilfe der einbetonierten Verankerungselemente fixiert. Der plattenförmige Einsatzkörper mit seinen auskragenden Verankerungselementen wird hierfür aus Stahlblech gefertigt, um die erforderliche Stabilität zu gewährleisten. Zum Verlegen der Rohre oder Leitungen können dem Durchmesser der zu verlegenden Rohre oder Leitungen entsprechende Öffnungen im plattenförmigen Einsatzkörper angefertigt werden.

Diese Vorgangsweise hat sich in der Praxis bewährt, verfügt aber über den Nachteil, dass weiterhin Seitenschalelemente zur Abgrenzung der Aussparung für den Installationsschacht verwendet werden müssen, was einen zusätzlichen Arbeitsaufwand sowohl beim Anbringen als auch beim Entfernen der Seitenschalelemente darstellt. Zudem ist der plattenförmige Einsatzkörper aus Stahlblech gefertigt, sodass die Anfertigung der Öffnungen für die Rohre oder Leitungen erschwert wird.

Es ist daher das Ziel der Erfindung die Herstellung vertikaler Durchlässe in einer Geschossdecke für Rohre oder Leitungen noch einfacher und somit kostengünstiger anzufertigen, wobei Anforderungen an den Brandschutz erfüllt und Absturzgefahr vermieden werden soll.

Dieses Ziel wird durch die Merkmale von Anspruch 1 erreicht. Anspruch 1 bezieht sich auf einen Schalungskörper zur Errichtung vertikaler Durchlässe in einer Geschossdecke für Rohre oder Leitungen, bei dem erfindungsgemäß vorgeschlagen wird, dass er aus zumindest einem, eine geschlossene Mantelfläche bildenden metallischen Seitenteil mit einer Höhe, die der Dicke der Geschossdecke entspricht, gebildet wird, wobei in einem unteren Bereich des zumindest einen Seitenteils eine den vom zumindest einen Seitenteil umgrenzten Querschnitt abdeckende und in das zumindest eine Seitenteil einlegbare Grundplatte mit Aussparungen für Rohre oder Leitungen angeordnet ist, und in einem oberen Bereich des zumindest einen Seitenteils Auflager für eine Abdeckung vorgesehen sind.

Der Schalungskörper kann auf die Deckenschalung aufgelegt und mithilfe vorgebohrter Löcher mit Nägel fixiert werden und verbleibt nach dem Betonieren der Geschossdecke und dem Entfernen der Deckenschalung, wie noch näher ausgeführt werden wird. Die Verwendung von Seitenschalelementen ist dabei nicht mehr erforderlich, weil die Höhe des Seitenteiles des Schalungskörpers der Dicke der Geschossdecke entspricht, die zumeist durch Baunormen festgelegt ist. In einem weiteren Schritt kann der Schalungskörper mithilfe der eingelegten und mit Aussparungen für Rohre oder Leitungen versehenen Grundplatte nach dem Verlegen der Rohre oder Leitungen verfüllt werden, beispielsweise mithilfe von Füllbeton.

Der erfindungsgemäße Schalungskörper verbessert das herkömmliche und oben beschriebene Verfahren auch deshalb, weil die einlegbare Grundplatte nicht mehr aus Stahlblech gefertigt sein muss, sondern beispielsweise als Zementfaserplatte ausgeführt sein kann, wodurch die Anfertigung der Aussparungen für die Rohre oder Leitungen erleichtert wird. Die Anfertigung der Aussparungen kann dabei nach vorheriger Entnahme der Grundplatte aus dem Schalungskörper komfortabel auf einem Werktisch oder dergleichen erfolgen. Zudem kann wie bereits erwähnt das Aufstellen, Fixieren und nachträgliche Entfernen der Seitenschalelemente unterbleiben, wodurch der erfindungsgemäße Schalungskörper eine raschere und damit kostengünstigere Vorgangsweise erlaubt. Der mithilfe der Erfindung ermöglichte Füllbetonkörper im Deckendurchbruch erfüllt alle Anforderungen an den Brandschutz und verfügt auch über bessere Schallschutzeigenschaften als die herkömmliche Weichschott-Isolierung. Dadurch kann auch das nachträgliche Ausstopfen des Deckendurchbruches mit Stopfwolle unterbleiben.

In einem oberen Bereich des zumindest einen Seitenteils sind erfindungsgemäß zudem Auflager für eine Abdeckung vorgesehen. Die Abdeckung deckt den vom zumindest einen Seitenteil umgrenzten Querschnitt ab und ist ebenfalls in das zumindest eine Seitenteil einlegbar. Die Auflager dienen dabei zum Einlegen einer Abdeckung in den Schalungskörper vor dem Verfüllen des Schalungskörpers. Diese Abdeckung kann beispielsweise als Pfostenplatte ausgeführt sein und verhindert eine Verformung des Schalungskörpers während der Bewehrungsverlegung und dem Ausbetonieren der Geschossdecke. Ferner dient sie als Absturzsicherung vor dem Verfüllen des Schalungskörpers und stellt eine provisorische Abdichtung über dem Deckendurchbruch als Witterungsschutz während der Rohbauphase dar. Die Abdeckung kann aber auch als Untergrund für die Anbringung einer provisorischen Abdichtung mittels Flämmpappe dienen. Durch die Anbringung der Flämmpappe wird der Deckendurchbruch zuverlässig abgedichtet, sodass in den darunter befindlichen Geschossen die Ausbaugewerke vor Erreichen der Dachgleiche witterungsgeschützt arbeiten können.

Vorzugsweise sind beim erfindungsgemäßen Schalungskörper vier Seitenteile vorgesehen, die einen rechteckförmigen Querschnitt umgrenzen. Die Mantelfläche entspricht somit jener eines prismatischen oder pyramidenstumpfförmigen Körpers. Die Grundplatte kann auf einem Lagerelement angeordnet sein, das aus einem entlang der unteren Randkante des zumindest einen Seitenteils verlaufenden und den Querschnitt verengenden Blechstreifen gebildet wird. Die Grundplatte kann auf diesen Blechstreifen aufgelegt werden. Falls der zumindest eine Seitenteil aus einem Blech gefertigt ist, kann der Blechstreifen einfach als Stehfalz durch Abkantung des unteren Randbereiches des Seitenteils gebildet werden.

Zudem wird vorgeschlagen, dass das zumindest eine Seitenteil mit mehreren, entlang seines Umfanges verteilt angeordneten Halteelementen versehen ist, die in den vom zumindest einen Seitenteil abgegrenzten Außenraum ragen. Mithilfe der in den Außenraum abstehenden Halteelemente wird der Schalungskörper kraftschlüssig mit der Stahlbetondecke verbunden.

Zudem kann vorgesehen sein, dass der zumindest eine Seitenteil gegenüber einer gedachten Vertikalen geneigt ausgeführt ist, beispielsweise mit 5° Neigung zu einer gedachten Vertikalen. Diese Ausführung erleichtert zum einen den Transport des Schalungskörpers, weil auf diese Weise mehrere Schalungskörper einfacher gestapelt werden können. Zum anderen verfügt diese Ausführung auch über sicherheitstechnische Vorteile. Bislang durchgeführte Brandschutzprüfungen haben nachgewiesen, dass der erfindungsgemäße Schalungskörper nach einer Branddauer von 90 Minuten keine strukturelle Beeinträchtigung aufweist. Er erfüllt somit derzeit gültige Brandschutznormen für Steigschächte sowie deren Abschottungen. Sollte es dennoch zu einer Verformung oder einem vollständigen Versagen des Schalungskörpers kommen, kann der Füllkörper durch die geneigten Seitenteile des Schalungskörpers lediglich geringfügig absacken, jedoch nicht herausfallen.

Insbesondere bei einer Ausführung der Seitenteile als Blechteile können die Auflager und/oder die Halteelemente vorteilhaft über vorgefertigte Einschnitte oder Stanzungen im Seitenteil verwirklicht werden. Insbesondere wird vorgeschlagen, dass das Auflager oder die Halteelemente aus lappenförmig aus dem zumindest einen metallischen Seitenteil ausbiegbaren Seitenteilelementen gebildet werden.

Die Haltelemente werden dabei gebildet, indem die ausbiegbaren Seitenteilelemente in den vom zumindest einen Seitenteil abgegrenzten Außenraum ausgebogen werden. Zusätzlich zum Ausbiegen können die Halteelemente auch noch um ihre Achse verdreht werden. Die somit in den Außenraum vom Seitenteil abstehenden Halteelemente bilden Krallen, die nach dem Betonieren der Stahlbetondecke sicher in der Geschoßdecke verankert sind.

Die Auflager werden gebildet, indem die ausbiegbaren Seitenteilelemente in den vom zumindest einen Seitenteil umgrenzten Innenraum ausgebogen werden. Auf das in den Innenraum ausgebogene Seitenteilelement kann die Abdeckung aufgelegt werden. Das Ausbiegen selbst kann bei den Halteelementen und den Auflagern direkt vor Ort an der Baustelle manuell mit einem Hammer oder dergleichen erfolgen. Der Arbeitsaufwand zur Errichtung des Schalungskörpers kann dadurch zusätzlich verringert werden.

Beispielsweise können die Auflager oder Halteelemente aus ausbiegbaren Seitenteilelementen gebildet werden, deren von Schnitt- oder Stanzungslinien und der vorgesehenen Biegelinie gebildete Kontur jeweils eine rechteckförmige- oder trapezförmige Form aufweisen. Vorzugsweise weisen dabei die Auflager oder Halteelemente aus ausbiegbaren Seitenteilelementen jeweils eine horizontale Biegelinie auf. Die horizontale Biegelinie bildet dabei eine Grundkante der trapezförmigen Kontur.

Für die Auflager wird insbesondere vorgeschlagen, dass die Auflager aus ausbiegbaren Seitenteilelementen gebildet werden, deren von Schnitt- oder Stanzungslinien und der horizontalen Biegelinie gebildete Kontur jeweils eine trapezförmige Form aufweisen, dessen seitliche Enden um eine zur horizontalen Biegelinie rechtwinkelige Biegelinie biegbar sind. Bei der trapezförmigen Kontur handelt es sich vorzugsweis um eine gleichschenklig trapezförmige Kontur. Die Einschnitte oder Stanzungen sind dabei so ausgeführt, dass die Schenkel dieser Kontur nach dem Ausbiegen des betreffenden Seitenteilelements um die horizontale Biegelinie um einen Biegewinkel von etwa 90° in einer weiteren Biegeumformung um die rechtwinkelige Biegelinie ebenfalls um einen Biegewinkel von etwa 90° nach unten umgebogen werden. Die auf diese Weise umgebogenen seitlichen Enden bilden somit eine Abstützung für das ausgebogene Seitenteilelement. Das ausgebogene Seitenteilelement bildet das Auflager für die Abdeckung. Das Umbiegen selbst kann bei den seitlichen Enden ebenfalls direkt vor Ort an der Baustelle manuell mit einem Hammer oder dergleichen erfolgen.

Gemäß einer alternativen Ausführungsform für die Halteelemente wird vorgeschlagen, dass die Halteelemente aus Haltestangen gebildet werden, die den zumindest einen Seitenteil mithilfe von Bohrungen in dem zumindest einen Seitenteil queren. Insbesondere wird vorgeschlagen, dass die Haltestangen als Gewindestangen ausgeführt sind, die in die Bohrungen einsteckbar sind. Für einen leichteren Transport des Schalungskörpers können die Gewindestangen auch erst vor Ort befestigt werden, wobei sie auf beiden Seiten des Seitenteils mit einer Beilagscheibe und einer Mutter verschraubt werden. Um statische Anforderungen einzuhalten, können Mutter und Beilagscheibe auf einer Seite werkseitig zusätzlich verschweißt und somit fixiert sein, um die gemäß Statik erforderliche Auskragung der Halteelemente zu gewährleisten.

In weiterer Folge wird ein Verfahren zur Errichtung vertikaler Durchlässe in einer Geschossdecke für Rohre oder Leitungen mithilfe eines erfindungsgemäßen Schalungskörpers und einer Deckenschalung vorgeschlagen, wobei die Deckenschalung nach dem Betonieren der Geschossdecke entfernt wird. Erfindungsgemäß wird hierbei vorgeschlagen, dass der Schalungskörper auf die Deckenschalung aufgelegt wird und nach dem Betonieren der Geschossdecke und dem Entfernen der Deckenschalung verbleibt, wobei in einem weiteren Schritt der Schalungskörper mithilfe der in den Schalungskörper eingelegten und mit Aussparungen für Rohre oder Leitungen versehenen Grundplatte nach dem Verlegen der Rohre oder Leitungen verfüllt wird. Das Verfüllen erfolgt vorzugsweise mit Füllbeton.

In einem weiteren Verfahrensschritt kann vor dem Verfüllen des Schalungskörpers eine Abdeckung auf die Auflager aufgelegt werden.

Das erfindungsgemäße Verfahren kann wesentlich rascher und kostengünstiger durchgeführt werden, als das derzeit praktizierte und oben beschriebene Verfahren. Der erfindungsgemäß verschlossene Durchbruch erfüllt dabei alle einschlägigen Brandschutznormen.

Die Erfindung wird in weiterer Folge anhand von Ausführungsbeispielen mithilfe der beiliegenden Figuren näher erläutert. Es zeigen hierbei die
Fig. 1 eine schematische Darstellung einer Ausführungsform eines erfindungsgemäßen Schalungskörpers ohne Halteelemente und Auflager vor dem Betonieren der Geschoßdecke von oben gesehen,
Fig. 2 eine Schnittansicht des Schalungskörpers gemäß Fig. 1 entlang der Schnittlinie A-A,
Fig. 3 eine Schnittansicht des Schalungskörpers gemäß Fig. 1 entlang der Schnittlinie B-B,
Fig. 4 eine schematische Darstellung einer ersten Ausführungsform eines erfindungsgemäßen Schalungskörpers mit Halteelemente und Bewehrungsstäbe als Auflager vor dem Betonieren der Geschoßdecke von oben gesehen,
Fig. 5 eine Schnittansicht des Schalungskörpers gemäß Fig. 4 entlang der Schnittlinie A-A,
Fig. 6 eine Schnittansicht des Schalungskörpers gemäß Fig. 4 entlang der Schnittlinie B-B,
Fig. 7 eine Schnittansicht des Schalungskörpers gemäß Fig. 4 entlang der Schnittlinie B-B nach dem Betonieren der Geschossdecke und Auflage einer Abdeckung, aber vor dem Entfernen der Deckenschalung,
Fig. 8 den Zuschnitt für einen Längsseitenteil gemäß einer zweiten Ausführungsform eines erfindungsgemäßen Schalungskörpers,
Fig. 9 eine Schnittansicht entlang der Schnittlinie A-A der zweiten Ausführungsform eines erfindungsgemäßen Schalungskörpers gemäß Fig. 10,
Fig. 10 eine schematische Darstellung der zweiten Ausführungsform eines erfindungsgemäßen Schalungskörpers mit Halteelemente und als ausbiegbare Seitenteilelemente gebildete Auflager von oben gesehen,
Fig. 11 den Zuschnitt für einen Querseitenteil der zweiten Ausführungsform eines erfindungsgemäßen Schalungskörpers, und die
Fig. 12 eine Schnittansicht entlang der Schnittlinie B-B der zweiten Ausführungsform eines erfindungsgemäßen Schalungskörpers gemäß Fig. 10.

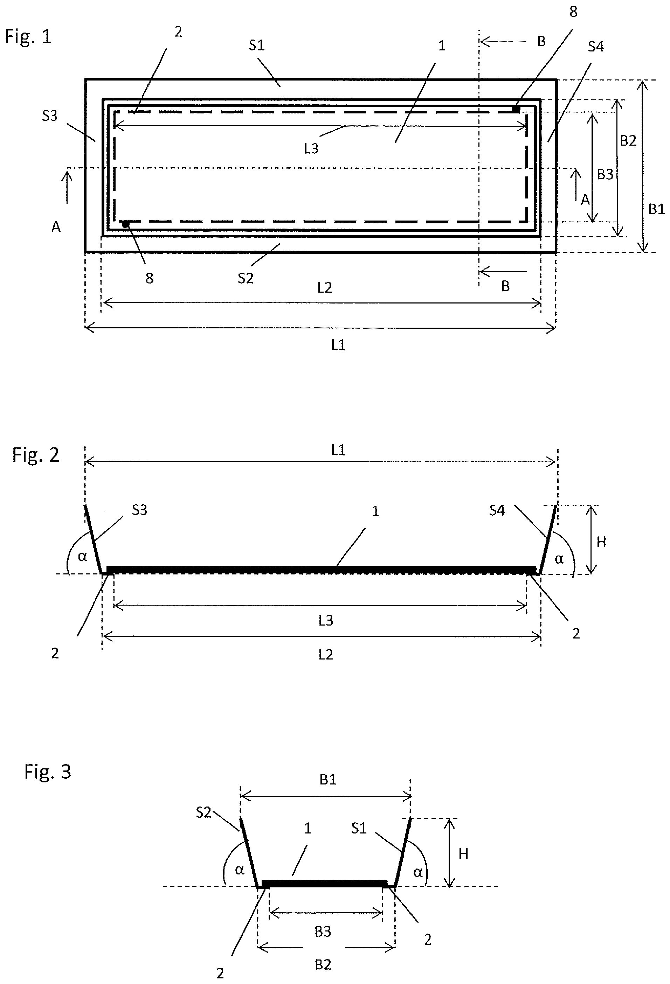

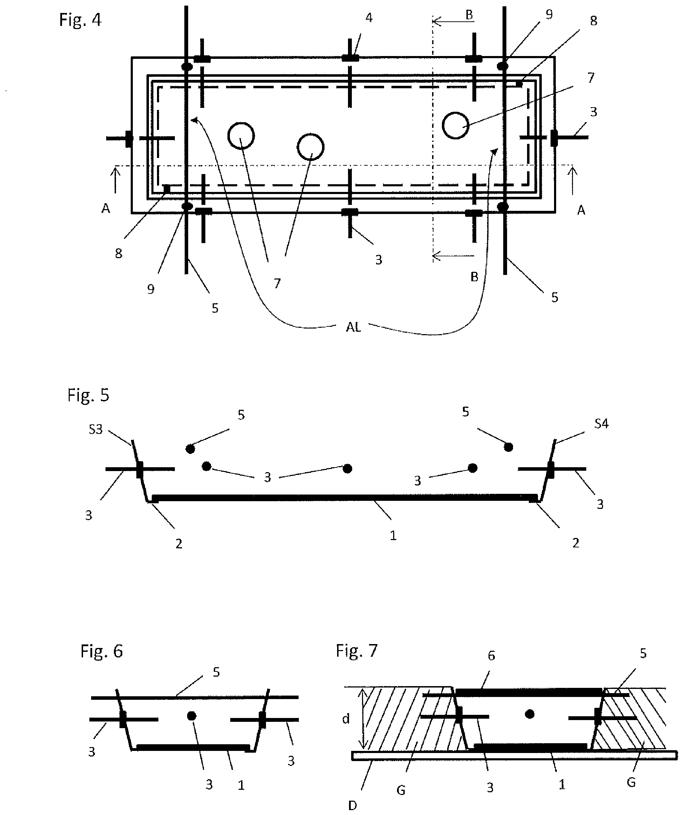

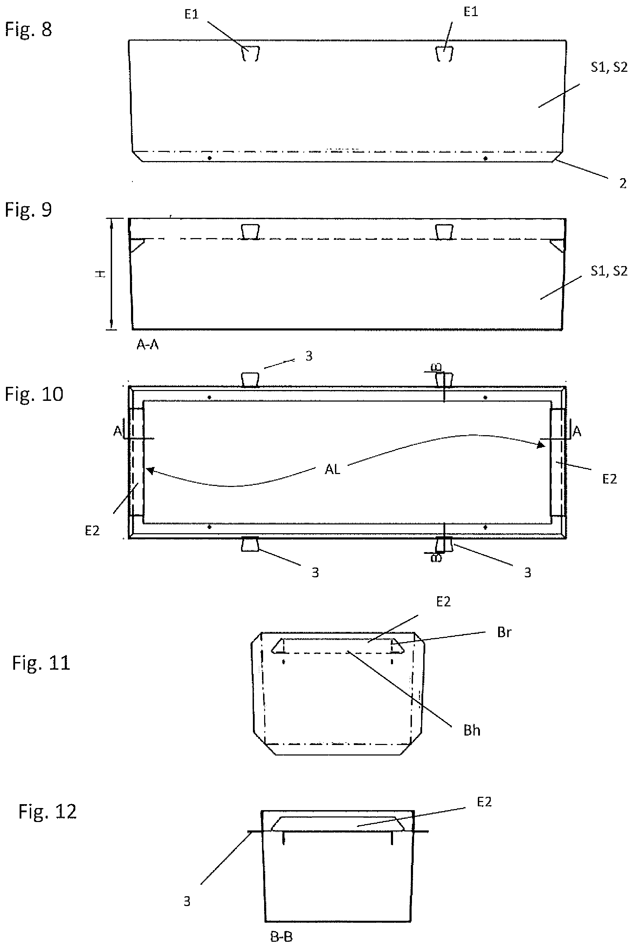

Zunächst wird auf die Fig. 1 bis 3 Bezug genommen, die schematische Darstellungen einer Ausführungsform eines erfindungsgemäßen Schalungskörpers vor dem Betonieren der Geschossdecke G von oben gesehen (Fig. 1) und in Schnittansichten (Fig. 2, Fig. 3) zeigen, wobei aus Gründen der Übersichtlichkeit die Halteelemente 3 und die Auflager AL nicht eingezeichnet wurden. Als Auflager AL werden hier jene Stellen verstanden, an denen die Abdeckung 6 beim Einlegen in den Schalungskörper aufliegen kann. Schematische Darstellungen einer ersten Ausführungsform eines erfindungsgemäßen Schalungskörpers mit Halteelementen 3 und Auflager AL sind in den Fig. 4 bis 7 gezeigt, und einer zweiten Ausführungsform für die Halteelemente 3 und Auflager AL in den Fig. 8 bis 12.

Der gezeigte Schalungskörper besteht in den gezeigten Ausführungsbeispielen aus vier Seitenteilen S1, S2, S3, S4, die eine geschlossene Mantelfläche der Höhe H bilden, die der Dicke d der Geschossdecke G entspricht (siehe auch Fig. 7). Die Seitenteile S1, S2, S3, S4 sind beispielsweise aus Stahlblech mit einer Blechstärke von beispielsweise 2mm, die aber grundsätzlich von den Abmessungen des Schalungskörpers abhängt, gefertigt und umgrenzen einen rechteckförmigen Querschnitt. Um mehrere Schalungskörper stapeln zu können sind die vier Seitenteile S1, S2, S3, S4 gegenüber einer gedachten Vertikalen geneigt ausgeführt, wie in den Fig. 2 und 3 anhand des Komplementärwinkels α illustriert ist. Die so gebildete Mantelfläche entspricht somit jener eines pyramidenstumpfförmigen Körpers, sodass sich der rechteckförmige Querschnitt des Schalungskörpers ausgehend vom größten Querschnitt des Schalungskörpers mit der Länge L1 der beiden Längsseitenteile S1, S2 und der Breite B1 der beiden Querseitenteile S3, S4, der von der oberen Randkante des Schalungskörpers umgrenzt wird, bis zum kleinsten Querschnitt des Schalungskörpers mit der Länge L2 der beiden Längsseitenteile S1, S2 und der Breite B2 der beiden Querseitenteile S3, S4, der von der unteren Randkante des Schalungskörpers umgrenzt wird, verringert. Im unteren Bereich des Schalungskörpers wird der Querschnitt zusätzlich durch ein Lagerelement 2 verengt, das im gezeigten Ausführungsbeispiel als ein entlang der unteren Randkante des zumindest einen Seitenteils S1, S2, S3, S4 verlaufender und den Querschnitt verengender Blechstreifen gebildet wird, der als Stehfalz durch Abkantung des unteren Randbereiches der Seitenteile S1, S2, S3, S4 gefertigt wurde. Das Lagerelement 2 verringert den Querschnitt des Schalungskörpers in diesem Bereich auf die Abmessungen L3 und B3.

Auf das Lagerelement 2 kann eine Grundplatte 1 aufgelegt werden, die beispielsweise als Zementfaserplatte ausgeführt ist, wodurch die Anfertigung von Aussparungen 7 (siehe Fig. 4) für die durchzuführenden Rohre oder Leitungen erleichtert wird. Die Anfertigung der Aussparungen 7 kann dabei nach vorheriger Entnahme der Grundplatte 1 aus dem Schalungskörper komfortabel auf einem Werktisch oder dergleichen auch vor Ort erfolgen.

In den Fig. 4 bis 7 ist des Weiteren eine erste Ausführungsform der Halteelemente 3 gezeigt. Die Halteelemente 3 werden beispielsweise aus Haltestangen gebildet, die die Seitenteile S1, S2, S3, S4 mithilfe von Bohrungen in den Seitenteilen S1, S2, S3, S4 etwa in der halben Höhe der Seitenteile S1, S2, S3, S4 queren. Im gezeigten Ausführungsbeispiel der Fig. 4 bis 7 sind etwa acht Halteelemente 3 vorgesehen, wobei jeweils drei Halteelemente 3 in den beiden Längsseitenteilen S1, S2 vorgesehen sind, und jeweils ein Halteelement 3 in den beiden Querseitenteilen S3, S4, wobei die Anzahl der Halteelemente 3 freilich von der Größe des Schalungskörpers abhängt. Die Haltestangen sind insbesondere als Gewindestangen ausgeführt, die in die Bohrungen einsteckbar sind. Für einen leichteren Transport des Schalungskörpers können die Gewindestangen auch erst vor Ort befestigt werden, wobei sie auf beiden Seiten des jeweiligen Seitenteils S1, S2, S3, S4 mit einer Beilagscheibe und einer Mutter 4 verschraubt werden können. Um statische Anforderungen einzuhalten, können Mutter 4 und Beilagscheibe auf einer Seite werkseitig zusätzlich verschweißt und somit fixiert sein, um die gemäß Statik erforderliche Auskragung der Halteelemente 3 zu gewährleisten.

In den Fig. 4 bis 7 ist des Weiteren eine erste Ausführungsform gezeigt, bei der Bewehrungsstäbe 5 vorgesehen sind, die in ihrer Gesamtheit als Auflager AL verwendet werden können. Hierfür sind in einem oberen Bereich der Seitenteile S1, S2, S3, S4 Öffnungen oder Schlitze 9 zum Einstecken oder Einlegen von den Querschnitt querenden Bewehrungsstäben 5 vorgesehen, die in diesem Ausführungsbeispiel gemeinsam die Auflager AL bilden. Im gezeigten Ausführungsbeispiel sind beispielsweise zwei Bewehrungsstäbe 5 für die Bildung der Auflager AL vorgesehen. Auf diese Bewehrungsstäbe 5 kann vor dem Verfüllen des Schalungskörpers eine Abdeckung 6 (siehe Fig. 7) aufgelegt werden. Diese Abdeckung 6 kann beispielsweise als Pfostenplatte ausgeführt sein und verhindert eine Verformung des Schalungskörpers während der Bewehrungsverlegung und dem Ausbetonieren der Geschossdecke G. Ferner dient sie als Absturzsicherung vor dem Verfüllen des Schalungskörpers und stellt eine provisorische Abdichtung über dem Deckendurchbruch als Witterungsschutz während der Rohbauphase dar. Die Abdeckung 6 kann aber auch als Untergrund für die Anbringung einer provisorischen Abdichtung mittels Flämmpappe dienen. Durch die Anbringung der Flämmpappe wird der Deckendurchbruch zuverlässig abgedichtet, sodass in den darunter befindlichen Geschossen die Ausbaugewerke vor Erreichen der Dachgleiche witterungsgeschützt arbeiten können.

In den Fig. 8 bis 12 ist eine zweite Ausführungsform der Halteelemente 3 und der Auflager AL gezeigt. Hierbei ist das zumindest eine metallische Seitenteil S1, S2, S3, S4 wiederum aus Blech gefertigt, wobei die Auflager AL und die Halteelemente 3 über vorgefertigte Einschnitte oder Stanzungen im jeweiligen Seitenteil S1, S2, S3, S4 verwirklicht werden. Die Haltelemente 3 und die Auflager AL sind dabei aus lappenförmig aus dem zumindest einen metallischen Seitenteil S1, S2, S3, S4 ausbiegbaren Seitenteilelementen E1, E2 gebildet. Die Haltelemente 3 werden gebildet, indem die ausbiegbaren Seitenteilelemente E1 von den Längsseitenteilen S1, S2 gemäß der Fig. 8 in den von den Seitenteilen S1, S2, S3, S4 abgegrenzten Außenraum ausgebogen werden, sodass sie die Konfiguration der Fig. 10 einnehmen. Zusätzlich zum Ausbiegen können die Halteelemente 3 auch noch um ihre Achse verdreht werden. Die somit in den Außenraum von den Längsseitenteilen S1, S2 abstehenden Halteelemente 3 bilden Krallen, die nach dem Betonieren der Stahlbetondecke sicher in der Geschoßdecke G verankert sind. Die Auflager AL werden gebildet, indem jeweils ein ausbiegbares Seitenteilelement E2 von den beiden Querseitenteilen S3, S4 gemäß der Fig. 11 in den von den Seitenteilen S1, S2, S3, S4 umgrenzten Innenraum ausgebogen wird, sodass sie die Konfiguration der Fig. 10 und Fig. 12 einnehmen. Die in den Innenraum ausgebogenen Seitenteilelemente E2 bilden die Auflager AL, auf die die Abdeckung 6 aufgelegt werden kann. Das Ausbiegen selbst kann bei den Halteelementen 3 und den Auflagern AL wie bereits erwähnt direkt vor Ort an der Baustelle manuell mit einem Hammer oder dergleichen erfolgen.

Wie in den Fig. 8 und Fig. 11 ersichtlich ist, werden die Auflager AL und die Halteelemente 3 aus ausbiegbaren Seitenteilelementen E1, E2 gebildet, deren von Schnitt- oder Stanzungslinien und der vorgesehenen Biegelinie gebildete Kontur jeweils eine trapezförmige Form aufweisen. Die ausbiegbaren Seitenteilelemente E1, E2 für die Auflager AL und die Halteelemente 3 weisen jeweils eine horizontale Biegelinie Bₕ auf.

Die Auflager AL werden im gezeigten Ausführungsbeispiel zudem aus ausbiegbaren Seitenteilelementen E2 gebildet, deren von Schnitt- oder Stanzungslinien und der horizontalen Biegelinie Bₕ gebildete Kontur jeweils eine trapezförmige Form aufweisen, dessen seitliche Enden zudem um eine zur horizontalen Biegelinie Bₕ rechtwinkelige Biegelinie Bᵣ biegbar sind (Fig. 11). Bei der trapezförmigen Kontur handelt es sich um eine gleichschenklig trapezförmige Kontur. Die Einschnitte oder Stanzungen sind dabei so ausgeführt, dass die Schenkel dieser Kontur nach dem Ausbiegen des betreffenden Seitenteilelements E2 um die horizontale Biegelinie Bₕ um einen Biegewinkel von etwa 90° in einer weiteren Biegeumformung um die rechtwinkelige Biegelinie Bᵣ ebenfalls um einen Biegewinkel von etwa 90° umgebogen werden können. Die auf diese Weise umgebogenen seitlichen Enden bilden somit eine Abstützung für das ausgebogene Seitenteilelement E2. Die beiden ausgebogenen Seitenteilelemente E2 bilden die Auflager AL für die Abdeckung 6 (siehe Fig. 10 und Fig. 12). Das Umbiegen selbst kann bei den seitlichen Enden ebenfalls direkt vor Ort an der Baustelle manuell mit einem Hammer oder dergleichen erfolgen.

Der Schalungskörper kann zur Errichtung vertikaler Durchlässe in einer Geschossdecke G auf die Deckenschalung D aufgelegt und mithilfe vorgebohrter Löcher 8 mit Nägel temporär fixiert werden. Er verbleibt nach dem Betonieren der Geschossdecke G und dem Entfernen der Deckenschalung D (siehe Fig. 7). Die Verwendung von Seitenschalelementen ist dabei nicht mehr erforderlich, weil die Höhe H der Seitenteile S1, S2, S3, S4 des Schalungskörpers der Dicke d der Geschossdecke G entspricht. In einem weiteren Schritt kann der Schalungskörper mithilfe der auf das Lagerelement 2 des Schalungskörpers aufgelegten und mit Aussparungen 7 für Rohre oder Leitungen versehenen Grundplatte 1 nach dem Verlegen der Rohre oder Leitungen verfüllt werden, beispielsweise mithilfe von Füllbeton.

In einem weiteren Verfahrensschritt kann vor dem Verfüllen des Schalungskörpers auch eine Abdeckung 6 auf die Auflager AL aufgelegt werden. Die Abdeckung 6 deckt den vom zumindest einen Seitenteil S1, S2, S3, S4 umgrenzten Querschnitt ab und ist in das zumindest eine Seitenteil S1, S2, S3, S4 einlegbar. Diese Abdeckung 6 verhindert wie bereits erwähnt eine Verformung des Schalungskörpers während der Bewehrungsverlegung und dem Ausbetonieren der Geschossdecke G. Ferner dient sie als Absturzsicherung vor dem Verfüllen des Schalungskörpers und stellt eine provisorische Abdichtung über dem Deckendurchbruch als Witterungsschutz während der Rohbauphase dar. Um die provisorische Abdichtung über dem Deckendurchbruch zu verbessern, kann über die Abdeckung 6 geflämmt werden. Die Abdeckung 6 muss in der Regel im Zuge der Verlegung von Rohren oder Leitungen entfernt werden, da diese ansonsten nicht durchgezogen werden können. Weiters ist nach Verlegung der Leitungen eine Absturzgefahr, bedingt durch die verlegten Leitungen, sogar vor dem Ausbetonieren des Schalungskörpers, nicht gegeben.

Es besteht auch die Möglichkeit den erfindungsgemäßen Schalungskörper für die Herstellung von Durchbrüchen im Holzbau einzusetzen. Bei dieser Bauweise können anstelle der Halteelemente 3 Öffnungen in den Seitenteilen S1, S2, S3, S4 vorgesehen werden, die eine Verschraubung des Schalungskörpers mit der Holzdecke im Bereich des vorgesehenen Durchbruchs ermöglichen.

Das erfindungsgemäße Verfahren kann wesentlich rascher und kostengünstiger durchgeführt werden, als das derzeit praktizierte und oben beschriebene Verfahren. Der erfindungsgemäß verschlossene Durchbruch erfüllt dabei alle einschlägigen Brandschutznormen.

## Patentansprüche

1. Schalungskörper zur Errichtung vertikaler Durchlässe in einer Geschossdecke (G) für Rohre oder Leitungen, **dadurch gekennzeichnet, dass** er aus zumindest einem, eine geschlossene Mantelfläche bildenden metallischen Seitenteil (S1, S2, S3, S4) mit einer Höhe (H), die der Dicke (d) der Geschossdecke (G) entspricht, gebildet wird, wobei in einem unteren Bereich des zumindest einen Seitenteils (S1, S2, S3, S4) eine den vom zumindest einen Seitenteil (S1, S2, S3, S4) umgrenzten Querschnitt abdeckende und in das zumindest eine Seitenteil (S1, S2, S3, S4) einlegbare Grundplatte (1) mit Aussparungen (7) für Rohre oder Leitungen angeordnet ist, und in einem oberen Bereich des zumindest einen Seitenteils (S1, S2, S3, S4) Auflager (AL) für eine Abdeckung (6) vorgesehen sind.

2. Schalungskörper nach Anspruch 1, **dadurch gekennzeichnet, dass** vier Seitenteile (S1, S2, S3, S4) vorgesehen sind, die einen rechteckförmigen Querschnitt umgrenzen.

3. Schalungskörper nach Anspruch 1 oder 2, **dadurch gekennzeichnet, dass** die Grundplatte (1) auf einem Lagerelement (2) angeordnet ist, das aus einem entlang der unteren Randkante des zumindest einen Seitenteils (S1, S2, S3, S4) verlaufenden und den Querschnitt verengenden Blechstreifen gebildet wird.

4. Schalungskörper nach einem der Ansprüche 1 bis 3, **dadurch gekennzeichnet, dass** der zumindest eine Seitenteil (S1, S2, S3, S4) gegenüber einer gedachten Vertikalen geneigt ausgeführt ist.

5. Schalungskörper nach einem der Ansprüche 1 bis 4, **dadurch gekennzeichnet, dass** das zumindest eine Seitenteil (S1, S2, S3, S4) mit mehreren, entlang seines Umfanges verteilt angeordneten Halteelementen (3) versehen ist, die in den vom zumindest einen Seitenteil (S1, S2, S3, S4) abgegrenzten Außenraum ragen.

6. Schalungskörper nach einem der Ansprüche 1 bis 5, **dadurch gekennzeichnet, dass** die Auflager (AL) aus lappenförmig aus dem zumindest einen metallischen Seitenteil (S1, S2, S3, S4) ausbiegbaren Seitenteilelementen (E2) gebildet werden.

7. Schalungskörper nach Anspruch 5, **dadurch gekennzeichnet, dass** die Halteelemente (3) aus lappenförmig aus dem zumindest einen metallischen Seitenteil (S1, S2, S3, S4) ausbiegbaren Seitenteilelementen (E1) gebildet werden.

8. Schalungskörper nach Anspruch 6 oder 7, **dadurch gekennzeichnet, dass** die Auflager (AL) oder Halteelemente (3) aus ausbiegbaren Seitenteilelementen (E1, E2) gebildet werden, deren von Schnitt- oder Stanzungslinien und der vorgesehenen Biegelinie (B) gebildete Kontur jeweils eine rechteckförmige- oder trapezförmige Form aufweisen.

9. Schalungskörper nach Anspruch 8, **dadurch gekennzeichnet, dass** die Auflager (AL) oder Halteelemente (3) aus ausbiegbaren Seitenteilelementen (E1, E2) eine horizontale Biegelinie (Bₕ) aufweisen.

10. Schalungskörper nach Anspruch 9, **dadurch gekennzeichnet, dass** die Auflager (AL) aus ausbiegbaren Seitenteilelementen (E2) gebildet werden, deren von Schnitt- oder Stanzungslinien und der horizontalen Biegelinie (Bₕ) gebildete Kontur jeweils eine trapezförmige Form aufweisen, dessen seitliche Enden um eine zur horizontalen Biegelinie (Bₕ) rechtwinkelige Biegelinie (Bᵣ) biegbar sind.

11. Schalungskörper nach Anspruch 5, **dadurch gekennzeichnet, dass** die Halteelemente (3) aus Haltestangen gebildet werden, die den zumindest einen Seitenteil (S1, S2, S3, S4) mithilfe von Bohrungen in dem zumindest einen Seitenteil (S1, S2, S3, S4) queren.

12. Schalungskörper nach Anspruch 11, **dadurch gekennzeichnet, dass** die Haltestangen als Gewindestangen ausgeführt sind, die in die Bohrungen einsteckbar sind.

13. Verfahren zur Errichtung vertikaler Durchlässe in einer Geschossdecke (G) für Rohre oder Leitungen mithilfe eines Schalungskörpers nach einem der Ansprüche 1 bis 12 und einer Deckenschalung (D), wobei die Deckenschalung (D) nach dem Betonieren der Geschossdecke (G) entfernt wird, **dadurch gekennzeichnet, dass** der Schalungskörper auf die Deckenschalung (D) aufgelegt wird und nach dem Betonieren der Geschossdecke (G) und dem Entfernen der Deckenschalung (D) verbleibt, wobei in einem weiteren Schritt der Schalungskörper mithilfe der in den Schalungskörper eingelegten und mit Aussparungen (7) für Rohre oder Leitungen versehenen Grundplatte (1) nach dem Verlegen der Rohre oder Leitungen verfüllt wird.

14. Verfahren nach Anspruch 13, **dadurch gekennzeichnet, dass** vor dem Verfüllen des Schalungskörpers eine Abdeckung (6) auf die Auflager (AL) aufgelegt wird.
